# EUROPÄISCHE PATENTSCHRIFT

(11) **EP 4 202 472 B1**
(45) Veröffentlichungstag und Bekanntmachung des Hinweises auf die Patenterteilung: **14.02.2024**
(21) Anmeldenummer: 22215050.0
(22) Anmeldetag: 20.12.2022
(51) Int. Cl.: G01S 7/03, G01F 23/284, G01S 7/40, G01S 13/88

(54) **VORRICHTUNG ZUR ABSTANDSMESSUNG UND VERFAHREN ZUR FUNKTIONSÜBERPRÜFUNG EINER VORRICHTUNG ZUR ABSTANDSMESSUNG**
DISTANCE MEASURING DEVICE AND METHOD FOR FUNCTIONALLY TESTING A DEVICE FOR DISTANCE MEASURING
DISPOSITIF DE MESURE DE DISTANCE ET PROCÉDÉ DE VÉRIFICATION DU FONCTIONNEMENT D'UN DISPOSITIF DE MESURE DE DISTANCE

(30) Priorität: 23.12.2021 DE 102021134451
(43) Veröffentlichungstag der Anmeldung: 28.06.2023
(73) Patentinhaber: Krohne S.A.S., 26103 Romans-sur-Isere Cedex (FR)
(72) Erfinder: Dubray, Olivier, 26100 Romans sur Isère (FR); Grosdidier, Samuel, 26300 Beauregard-Baret (FR)
(74) Vertreter: Gesthuysen Patentanwälte

(56) Entgegenhaltungen:
- DE-A1-102014 107 249
- DE-A1-102017 123 185
- US-A- 3 229 286
- US-A- 4 360 812
- US-A1- 2009 189 800

## Beschreibung

Die Erfindung betrifft eine Vorrichtung zur Abstandsmessung, insbesondere ein Radar-Füllstandmessgerät, umfassend wenigstens einen Signalgenerator zur Erzeugung eines elektromagnetischen Messsignals, wenigstens eine Sendeantenne zur Aussendung des Messsignals und wenigstens eine Empfangsantenne für den Empfang eines Empfangssignals, wobei der Signalgenerator zumindest mit der Sendeantenne verbunden ist, wenigstens einen ersten Mischer, wobei ein erster Eingang des ersten Mischers mit dem Signalgenerator verbunden ist und wobei ein zweiter Eingang des ersten Mischers zumindest mit der Empfangsantenne verbunden ist, sodass der erste Mischer im Betrieb zumindest das von dem Signalgenerator erzeugte Messsignal und das von der Empfangsantenne empfangene Empfangssignal mischt, und weiterhin umfassend eine Auswerteeinheit.

Darüber hinaus betrifft die Erfindung ein Verfahren zur Funktionsüberprüfung einer Vorrichtung zur Abstandsmessung.

Vorrichtungen zur Abstandsmessung wie beispielsweise Füllstandmessgeräte sind aus dem Stand der Technik bekannt. Gattungsgemäße Vorrichtungen bestimmen eine zu messende Entfernung meist basierend auf der Laufzeit eines elektromagnetischen Messsignals.

Dabei können gattungsgemäße Vorrichtungen interne Defekte aufweisen, die beispielsweise auf einen nicht korrekt funktionierenden Signalgenerator oder auch auf eine nicht korrekt funktionierende Auswerteeinheit zurückzuführen sind, sodass zwar ein Messwert bestimmt und angezeigt werden kann, wobei jedoch dieser Messwert einen erhöhten Messfehler aufweist. Der erhöhte Messfehler ist nicht unbedingt in dem angezeigten Messwert ersichtlich. Insbesondere dann, wenn der Messfehler klein ist und der angezeigte Messwert trotzdem plausibel erscheint, kann ein solcher interner Messfehler unentdeckt bleiben.

Aus dem Stand der Technik ist es bekannt, zur Überprüfung von Vorrichtungen zur Abstandsmessung mechanische Ziele, beispielsweise in Behältern eingebaute Referenzreflektoren vorzusehen, die eine Referenzreflexion des Messsignals bewirken. Wird bei der Auswertung des Empfangssignals die Referenzreflexion sowie die der Referenzreflexion entsprechende Entfernung gemessen, so kann davon ausgegangen werden, dass der Signalgenerator sowie die Auswerteeinheit, im Detail auch der Auswertealgorithmus korrekt funktionieren. Die Funktionsüberprüfung ist damit jedoch an die mechanische Ausgestaltung der Messumgebung gebunden und kann weiterhin nur in Kombination mit der Aussendung des Messsignals in die Messumgebung durchgeführt werden.

Aus dem Dokument US 4,360,812 A ist ein FM-CW Radarsystem zur Abstandsmessung mit einer Sende- und einer Empfangsantenne bekannt, wobei in einem ersten Mischer das von dem Signalgenerator ausgesendete Messsignal und das von der Empfangsantenne empfangene Empfangssignal gemischt werden. Zudem ist ein zweiter Mischer vorhanden, der das von dem Signalgenerator ausgesendete Messsignal mit einem Vergleichssignal mischt. Das Vergleichssignal wird dadurch erzeugt, dass das Messsignal eine Verzögerungsleitung durchläuft. Anschließend werden die Ausgangssignale der beiden Mischer in einem dritten Mischer miteinander verglichen. Dabei wird durch die Verzögerungsleitung ein Abstand simuliert, der als Grenzwert für ein auszulösendes Ereignis, beispielsweise für die Detonation eines Zünders, dient. Insgesamt wird also durch das Vorhandensein der Verzögerungsleitung ein Grenzwert erzeugt, wobei durch den Vergleich mit dem Empfangssignal ein Unterschreiten oder Überschreiten dieses Grenzwertes bestimmt wird.

Die Druckschrift US 3,229,286 A offenbart ebenfalls ein FM-CW Radarsystem mit einer Sendeantenne und einer Empfangsantenne, wobei das erzeugte Messsignal über einen ersten Mischer mit dem von der Empfangsantenne empfangenen Empfangssignal gemischt wird. Zudem ist eine Regelungseinheit, die die Frequenzvariation der Aussendung des Messsignals regelt, vorhanden, wobei die Regelungseinheit durch den Ausgang des ersten Mischers gespeist wird. Weiterhin wird das Messsignal über einen Richtkoppler auf eine zweite Leitung direkt zu einem zweiten Mischer und zu einer Verzögerungsleitung geleitet. Aufgrund des Vorhandenseins der Regelungseinheit steckt in dem ausgesendeten Messsignal die Abstandsinformation des zu messenden Objekts, die über diese zweite Leitung bestimmt und angezeigt wird.

Zudem ist aus der Druckschrift EP 0 167 505 A2 ein Füllstandmessgerät bekannt, wobei ein Teil des erzeugten Messsignals durch eine Verzögerungseinheit, die eine bekannte Länge simuliert, geleitet wird und wobei das verzögerte Referenzsignal zur Bestimmung der Entfernung des zu messenden Objekts mit dem Empfangssignal gekoppelt wird.

Die Druckschrift US 6,087,979 A offenbart eine Vorrichtung zur Abstandsmessung mit verbesserter Kohärenzlänge, wobei das Messsignal, bevor es in einem Mischer mit dem Empfangssignal gemischt wird, in einer Verzögerungseinheit verzögert wird. Alternativ wird das Radarmesssignal in einem zweiten Mischer mit dem ausgesendeten Messsignal gemischt, wobei die Auswerteeinheit aus dem am Ausgang liegenden Signal des zweiten Mischers eine Korrektur der Verzögerungseinheit bestimmt, sodass das verzögerte Messsignal und das Empfangssignal innerhalb der Kohärenzlänge liegen.

DE102014107249A1 offenbart ein Verfahren zur Überwachung der Funktionstüchtigkeit einer Radarvorrichtung sowie eine Radarvorrichtung mit einer Selbstüberwachungsfunktion.

Ausgehend von dem dargelegten Stand der Technik ist es Aufgabe der Erfindung, eine Vorrichtung zur Abstandsmessung anzugeben, die eine verbesserte Messgenauigkeit aufweist. Darüber hinaus ist es Aufgabe der Erfindung, ein Verfahren zur Funktionsüberprüfung der Vorrichtung zur Abstandsmessung anzugeben.

Gemäß einer ersten Lehre der vorliegenden Erfindung wird die zuvor dargelegte Aufgabe durch eine eingangs beschriebene Vorrichtung zur Abstandsmessung dadurch gelöst, dass eine integrierte Diagnoseeinheit vorhanden ist, wobei die Diagnoseeinheit zumindest eine Diagnoseleitung aufweist, wobei der Signalgenerator mit der Diagnoseleitung derart verbunden ist, dass im Betrieb das von dem Signalgenerator erzeugte Messsignal zumindest teilweise in die Diagnoseleitung eingekoppelt wird,
dass die Diagnoseleitung wenigstens ein Verzögerungselement aufweist, wobei im Betrieb das Messsignal nach zumindest einem Durchlauf durch das Verzögerungselement als Diagnosesignal ausgebildet ist, und
dass die Diagnoseleitung mit dem ersten Mischer oder mit einem zweiten Mischer verbunden ist, sodass im Betrieb das Diagnosesignal in dem ersten Mischer oder in dem zweiten Mischer mit dem Messsignal zu einem Diagnose-Mischsignal gemischt wird,
dass der Ausgang des ersten Mischers, und sofern vorhanden der Ausgang des zweiten Mischers, mit der Auswerteeinheit verbunden ist bzw. sind und dass die Auswerteeinheit derart ausgebildet ist, dass sie anhand des Diagnose-Mischsignals die Funktionsfähigkeit des Signalgenerators und/oder des Auswertealgorithmus überprüft.

Das von dem Signalgenerator erzeugte Messsignal ist ein elektromagnetisches Signal, insbesondere ein Radar-Messsignal, besonders bevorzugt ein FM-CW Radar-Messsignal.

Erfindungsgemäß wurde erkannt, dass ein in die Messanordnung der Vorrichtung zur Abstandsmessung integriertes Referenzelement in Form einer bekannten Verzögerung des Messsignals insofern vorteilhaft ist, als dass kein zusätzliches mechanisches Element außerhalb der Vorrichtung vorhanden sein muss, um die korrekte Funktionsfähigkeit der Vorrichtung zu überprüfen. Durch eine solche integrierte Diagnoseeinheit kann damit besonders flexibel unabhängig von der mechanischen Ausgestaltung der Messumgebung sowie auch unabhängig von der tatsächlichen Aussendung des Messsignals in die Messumgebung die korrekte Funktionsfähigkeit der Vorrichtung überprüft werden.

Eine solche erfindungsgemäße Funktionsüberprüfung ist insbesondere relevant zur Erfüllung der Anforderungen im Rahmen der funktionalen Sicherheit (SIL).

Bestimmt die Auswerteeinheit zur Überprüfung der Funktionsfähigkeit aus dem Diagnose-Mischsignal die durch das Verzögerungselement erzeugte, also vorgegebene, Differenzfrequenz, so ist dies ein Beleg für die korrekte Funktionsweise des Signalgenerators. Lässt sich darüber hinaus aus dem Diagnosesignal die durch das Verzögerungselement simulierte Entfernung bestimmen, so ist dies eine weitere Bestätigung dafür, dass der Auswertealgorithmus korrekt arbeitet.

Im Ergebnis kann durch die erfindungsgemäße integrierte Überprüfung der korrekten Funktionsfähigkeit der Vorrichtung eine verbesserte Genauigkeit der durch die Vorrichtung ausgegebenen Messwerte gewährleistet werden, da auch kleine Messfehler, die auf interne Fehlfunktionen zurückzuführen sind, erkannt werden.

Gemäß einer ersten Ausgestaltung ist die Sendeantenne und die Empfangsantenne als eine gemeinsame Sende- und Empfangsantenne ausgebildet, d.h. als eine Antenne, die sowohl das Messsignal aussendet als auch das Empfangssignal empfängt. Diese Ausgestaltung weist den Vorteil auf, dass die Messanordnung der erfindungsgemäßen Vorrichtung besonders kompakt ausgebildet sein kann.

Gemäß einer alternativen Ausgestaltung weist die Vorrichtung eine Sendeantenne zur Aussendung des Messsignals und eine von der Sendeantenne separat ausgebildete Empfangsantenne für den Empfang eines an einem Objekt reflektierten Empfangssignal auf.

Besonders bevorzugt ist wenigstens ein Kopplungselement vorhanden, wobei der Signalgenerator über das Kopplungselement zumindest mit der Sendeantenne verbunden ist, sodass im Betrieb das Messsignal über das Kopplungselement zumindest teilweise an die Sendeantenne übertragen wird, und wobei der Signalgenerator über das Kopplungselement mit der Diagnoseleitung verbunden ist, sodass im Betrieb das Messsignal über das Kopplungselement zumindest teilweise an die Diagnoseleitung übertragen wird.

Gemäß einer besonders bevorzugten Ausgestaltung der erfindungsgemäßen Vorrichtung ist die Sendeantenne und die Empfangsantenne als eine gemeinsame Sende- und Empfangsantenne ausgebildet und im Betrieb wird weiterhin das Empfangssignal über das Kopplungselement zu dem ersten Mischer übertragen. Diese Ausgestaltung weist den Vorteil auf, dass die vorhandenen Leitungen der Messanordnung zumindest teilweise sowohl für die Messanordnung zur üblichen Abstandsmessung als auch für die Diagnoseeinheit genutzt werden können. Diese Vorrichtung ist damit insgesamt besonders kompakt ausgebildet.

Gemäß einer Ausgestaltung der Vorrichtung ist das Kopplungselement als Richtkoppler, vorzugsweise mit vier Toren P₁, P₂, P₃ und P₄ ausgebildet Alternativ kann der Richtkoppler auch weniger Tore, beispielsweise drei Tore P₁, P₂ und P₃ oder auch mehr Tore, beispielsweise fünf Tore P₁, P₂, P₃, P₄ und P₅ aufweisen.

Weist der Richtkoppler vier Tore P₁, P₂, P₃ und P₄ auf, so wird das den Richtkoppler durchlaufende Messsignal in Abhängigkeit von der Laufrichtung des Messsignals in unterschiedliche Tore ausgekoppelt.

Im Detail wird gemäß einer Ausgestaltung ein Messsignal, das durch Tor P₁ in den Richtkoppler einkoppelt, sowohl über Tor P₂ in Richtung der Sende- und Empfangsantenne als auch über Tor P₄ in die Diagnoseleitung ausgekoppelt. Das Empfangssignal wiederum koppelt über Tor P₂ in den Richtkoppler ein und wird weiterhin über Tor P₃ in Richtung des ersten Mischers ausgekoppelt. Ein kleiner Teil des Empfangssignals kann auch über Tor P₁ in Richtung des Signalgenerators ausgekoppelt werden, wobei im Betrieb dieser Teil nicht weiter genutzt wird.

Gemäß einer weiteren Ausgestaltung kann der Richtkoppler vier Tore P₁, P₂, P₃ und P₄ aufweisen, wobei ein Messsignal, das durch Tor P₁ in den Richtkoppler einkoppelt, sowohl über Tor P₂ in Richtung der Sendeantenne als auch über Tor P₄ in die Diagnoseleitung ausgekoppelt. Die separat ausgebildete Empfangsantenne ist unmittelbar mit dem ersten Mischer verbunden.

Gemäß einer nächsten vorteilhaften Ausgestaltung ist das Kopplungselement derart unsymmetrisch ausgebildet ist, dass die Signalübertragung in die einzelnen Tore unterschiedlich gewichtet ist, wobei vorzugsweise im Betrieb in das Tor Richtung Sendeantenne zwischen 60 % und 80 % der eingehenden Leistung des Messsignals übertragen werden. Besonders bevorzugt wird der Rest der Leistung über ein weiteres Tor in die Diagnoseleitung eingekoppelt. Je nach Anwendungsfall kann auch ein höherer oder ein geringerer Anteil des Messsignals in Richtung der Sendeantenne übertragen werden. Beispielsweise kann ein Anteil von ca. 50 % der Leistung des Messsignals in Richtung der Sendeantenne übertragen werden und ca. 50 % der Leistung in Richtung der Diagnoseleitung.

Wenn in den vorhergehenden Ausführungen von einer Sendeantenne die Rede ist, so kann die Sendeantenne sowohl als separate Sendeantenne als auch als Sende- und Empfangsantenne ausgebildet sein.

Gemäß einer nächsten vorteilhaften Ausgestaltung ist die Diagnoseleitung durch ein Reflexionselement begrenzt. Das Reflexionselement ist dabei in Ausbreitungsrichtung des Messsignals hinter dem Verzögerungselement angeordnet, sodass das Diagnosesignal nach der Reflexion an dem Reflexionselement das Verzögerungselement erneut durchläuft. Insgesamt durchläuft das Diagnosesignal damit zweimal das Verzögerungselement. Besonders bevorzugt wird das Diagnosesignal nach der Reflexion an dem Reflexionselement in den ersten Mischer geleitet, wobei das Diagnosesignal über dieselbe Leitung wie das Empfangssignal in den ersten Mischer eingespeist wird.

Insgesamt wird gemäß einer Ausgestaltung eine Linearkombination aus dem Diagnosesignal und dem Empfangssignal in den ersten Mischer eingespeist. Gemäß einer weiteren Ausgestaltung wird das Diagnosesignal zwar über dieselbe Leitung wie das Empfangssignal in den ersten Mischer geleitet, jedoch ist durch die Ausgestaltung des Verzögerungselementes ein Zeitversatz zwischen dem Diagnosesignal und dem Empfangssignal vorhanden, sodass die beiden Signale getrennt ausgewertet werden können.

Diese Ausgestaltung weist den Vorteil auf, dass kein zweiter Mischer zur Mischung des Diagnosesignals mit dem Messsignal vorhanden sein muss. Somit kann ein besonders großer Teil der vorhandenen Leitungen sowohl für die Messanordnung zur üblichen Abstandsmessung als auch für die Diagnoseeinheit genutzt werden.

Zur Überprüfung einer korrekten Funktionsfähigkeit der Vorrichtung zur Abstandsbestimmung bestimmt die Auswerteeinheit gemäß einer Ausgestaltung die Frequenz des Diagnose-Mischsignals. Stimmt die bestimmte Frequenz mit einem in der Auswerteeinheit hinterlegten Referenzfrequenzwert überein, so ist davon auszugehen, dass der Signalgenerator korrekt funktioniert.

Alternativ oder zusätzlich bestimmt die Auswerteeinheit aus dem Diagnose-Mischsignal die mit dem Verzögerungselement simulierte Entfernung. Stimmt der so bestimmte Abstand mit einem hinterlegten Wert überein, so kann davon ausgegangen werden, dass auch der Auswertealgorithmus korrekt funktioniert.

Die Auswerteeinheit weist gemäß einer Ausgestaltung verschiedene Einheiten auf. Die Auswerteeinheit weist wenigstens eine erste Signalempfangseinheit auf, die mit dem Ausgang des ersten Mischers verbunden ist. Weiterhin weist die Auswerteeinheit eine erste Recheneinheit mit dem Auswertealgorithmus auf, die mit der ersten Signalempfangseinheit verbunden ist.

Optional weist die Auswerteeinheit eine zweite Signalempfangseinheit auf, die mit dem Ausgang des zweiten Mischers verbunden ist. Optional ist eine zweite Recheneinheit mit dem Diagnosealgorithmus vorhanden. Zudem ist eine Speichereinheit vorhanden, in der Referenzwerte hinterlegt sind.

Gemäß einer weiteren bevorzugten Ausgestaltung ist das Verzögerungselement derart ausgebildet, dass das Diagnosesignal einen Frequenzunterschied zu dem Empfangssignal aufweist, sodass die durch das Verzögerungselement simulierte Entfernung einer Entfernung entspricht, die nicht im üblichen Messbereich liegt. Dabei ist der übliche Messbereich, der Bereich vor der Sendeantenne, in dem ein zu erfassendes Target angeordnet ist. Diese Ausgestaltung gewährleistet, dass die Auswertung des Diagnosesignals von der Auswertung des Empfangssignals unterschieden werden kann, und zwar auch dann wenn die beiden Signale über dieselbe Leitung der Auswerteeinheit zugeleitet werden. Insbesondere in dem Fall, in dem in dem ersten Mischer die Linearkombination aus dem Diagnosesignal und dem Empfangssignal mit dem Messsignal gemischt wird, ist diese Ausgestaltung vorteilhaft. Zudem kann gemäß dieser Ausgestaltung die Überprüfung der Funktionsfähigkeit der Vorrichtung zeitgleich zur üblichen Abstandsmessung erfolgen.

Gemäß einer weiteren Ausgestaltung ist das Verzögerungselement als Wellenleiter oder als Slow Wave Wellenleiter oder als Mikrostreifenleitung oder als Koaxialleitung ausgebildet.

Gemäß einer nächsten Ausgestaltung sind wenigstens zwei Verzögerungselemente vorhanden, die parallel oder seriell in die Diagnoseleitung integriert werden. Beispielsweise kann vor den Verzögerungselementen ein RF-Switch angeordnet sein, wobei jeder Ausgang mit einem Verzögerungselement verbunden ist und wobei sich die Verzögerungselemente unterscheiden. Dadurch, dass im Betrieb der Ausgang ausgewählt werden kann, kann das Verzögerungselement angepasst bzw. geändert werden. Denkbar ist ebenfalls, dass das wenigstens eine Verzögerungselement einstellbar ausgestaltet ist, sodass die simulierte Entfernung an die jeweilige Anwendung angepasst werden kann.

Besonders bevorzugt ist die Auswerteeinheit zur Durchführung eines der nachfolgend beschriebenen Verfahren ausgebildet.

Grundsätzlich gelten sämtliche Ausführungen, die in Bezug auf die erfindungsgemäße Vorrichtung gemacht werden ebenso für das nachfolgend beschriebene Verfahren und umgekehrt.

Gemäß einer zweiten Lehre der vorliegenden Erfindung wird die eingangs genannte Aufgabe durch ein eingangs beschriebenes Verfahren zur Funktionsüberprüfung einer Vorrichtung zur Abstandsmessung dadurch gelöst, dass die Vorrichtung nach einer der zuvor beschriebenen Ausgestaltungen ausgebildet ist und
das Verfahren die folgenden Schritte aufweist:
- Aussenden eines elektromagnetischen Messsignals durch den Signalgenerator, wobei ein Teil des Messsignals in den ersten Mischer eingespeist wird und wobei ein Teil des Messsignals in die Diagnoseleitung einkoppelt, sodass das Messsignal das Verzögerungselement wenigstens einmal durchläuft und so zum Diagnosesignal wird und optional Einspeisen des Messsignals in einen zweiten Mischer,
- Mischen des Diagnosesignals mit dem Messsignal in dem ersten Mischer oder in dem zweiten Mischer und erzeugen eines Diagnose-Mischsignals,
- Erfassen und Auswerten des Diagnose-Mischsignals durch die Auswerteeinheit,
- wobei die Auswerteeinheit zur Auswertung die Frequenz des Diagnose-Mischsignals bestimmt und mit einem Referenzwert vergleicht und/oder wobei aus dem Diagnose-Mischsignal die dem Verzögerungselement entsprechende Entfernung bestimmt wird und mit einem Referenzwert verglichen wird.

Erfindungsgemäß wird zur Funktionsüberprüfung bestimmt, ob die Auswertung des Diagnosesignals mit vorgegebenen Werten für den Frequenzhub bzw. der simulierten Entfernung übereinstimmt. Stimmt die Frequenz mit dem hinterlegten Referenzwert überein, so kann daraus auf eine korrekte Funktionsweise des Signalgenerators geschlossen werden. Stimmt auch die gemessene Entfernung mit der vorgegebenen Entfernung überein, so belegt dies, dass auch der Auswertealgorithmus korrekt arbeitet. Dabei wird davon ausgegangen, dass der Algorithmus zur Bestimmung der simulierten Entfernung im Betrieb ebenfalls das Empfangssignal auswertet.

Neben der Auswertung der Frequenz und/oder der Entfernung können ebenfalls weitere Parameter des Diagnosesignals zur Überprüfung einer korrekten Funktionsfähigkeit der Vorrichtung erfasst werden. Beispielsweise kann die Form des Diagnosesignals mit der Form des Referenzsignals verglichen werden.

Sofern die gemessene Frequenz des Diagnose-Mischsignals von dem hinterlegten Frequenzwert unter Berücksichtigung eines Toleranzbereiches und/oder der gemessene Abstand von dem hinterlegten Referenzabstand unter Berücksichtigung eines Toleranzbereiches abweicht, ist davon auszugehen, dass ein interner Fehler vorliegt. Weicht die Peakbreite des Diagnosesignals unter Berücksichtigung eines Toleranzbereichs von der Peakbreite des Referenzsignals ab, so ist dies ein Hinweise auf einen Fehler der Breite der ausgesendeten Frequenzrampe.

Dies kann dem Nutzer beispielsweise über eine Anzeigeeinheit mitgeteilt werden. Alternativ oder zusätzlich kann eine Schnittstelle, insbesondere eine Stromschnittstelle, vorhanden sein, über die die Fehlermeldung ausgegebenen wird. Alternativ oder zusätzlich kann ein Relais vorhanden sein, das im Fehlerfall in einen Fehlerzustand versetzt werden kann.

Alternativ oder zusätzlich kann die Abweichung der gemessenen Frequenz von dem hinterlegtem Wert und/oder die Abweichung des gemessenen Abstandes von dem hinterlegten Referenzabstand bestimmt werden und die so bestimmte Abweichung wird zur Korrektur des angezeigten Messwerts genutzt.

Besonders bevorzugt wird das Verfahren für jeden Messvorgang oder regelmäßig oder auf Nachfrage des Benutzers durchgeführt. Insofern kann die Funktionsüberprüfung zeitgleich oder auch zeitversetzt zur üblichen Abstandsmessung durchgeführt werden.

Gemäß einer Ausgestaltung entspricht das Signal am zweiten Eingang des ersten Mischers einer Linearkombination aus dem Empfangssignal und dem Diagnosesignal, sodass am ersten Mischer die Linearkombination mit dem Messsignal zu einem kombinierten Mischsignal gemischt wird. Diese Ausgestaltung des Verfahrens geht von einer Vorrichtung aus, bei der die Diagnoseleitung durch ein Reflexionselement begrenzt ist, sodass das Diagnosesignal zurück in den ersten Mischer geleitet wird.

Besonders bevorzugt ist das Verzögerungselement dann derart ausgebildet, dass sich die Frequenz des Diagnosesignals und des Empfangssignals unterscheiden, sodass die durch das Verzögerungselement simulierte Entfernung einer Entfernung entspricht, die nicht im üblichen Messbereich liegt und sodass die Auswerteeinheit das Diagnose-Mischsignal basierend auf dem Frequenzunterschied aus dem kombinierten Mischsignal extrahiert.

Es gibt nun eine Vielzahl von Möglichkeiten die erfindungsgemäße Vorrichtung und das erfindungsgemäße Verfahren auszugestalten und weiterzubilden. Hierzu wird verwiesen auf die den unabhängigen Patentansprüchen nachgeordneten Patentansprüche sowie auf die nachfolgende Beschreibung von bevorzugten Ausführungsbeispielen in Verbindung mit der Zeichnung. In der Zeichnung zeigt
- Fig. 1: ein erstes Ausführungsbeispiel einer erfindungsgemäßen Vorrichtung,
- Fig. 2: ein nächstes Ausführungsbeispiel einer erfindungsgemäßen Vorrichtung,
- Fig. 3: ein weiteres Ausführungsbeispiel einer erfindungsgemäßen Vorrichtung,
- Fig 4: ein weiteres Ausführungsbeispiel einer erfindungsgemäßen Vorrichtung,
- Fig. 5: ein weiteres Ausführungsbeispiel einer erfindungsgemäßen Vorrichtung und
- Fig. 6: ein erstes Ausführungsbeispiel eines erfindungsgemäßen Verfahrens.

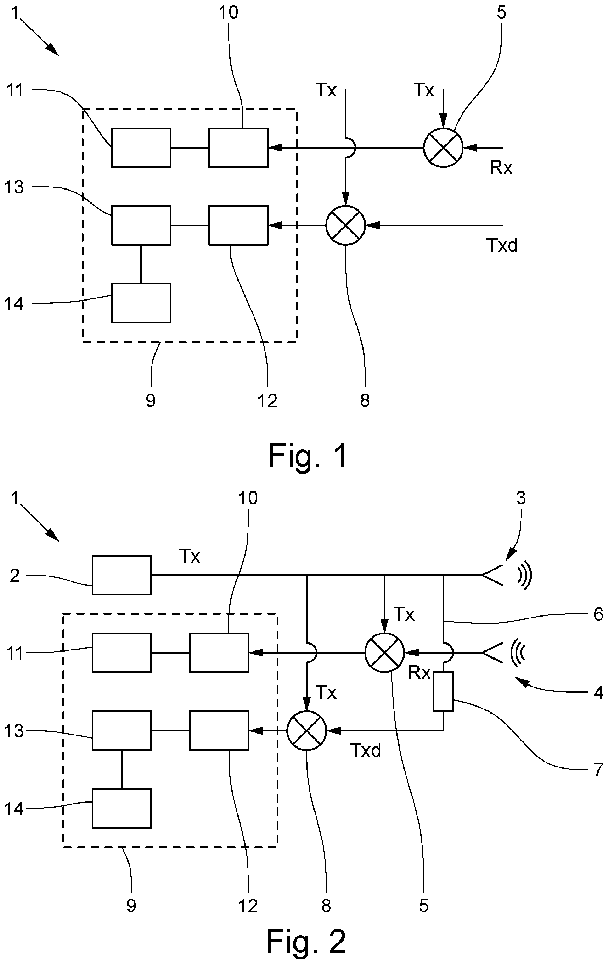

Fig. 1 zeigt ein erstes Ausführungsbeispiel einer Vorrichtung 1 zur Abstandsmessung, wobei die signalerzeugende Einheit und die Sende- bzw. Empfangsantenne nicht dargestellt sind. Vielmehr zeigt Fig. 1 schematisch die Auswerteeinheit 9 der Vorrichtung 1 sowie einen ersten Mischer 5 und einen zweiten Mischer 8, die der Auswerteeinheit 9 Signale zur Auswertung zuleiten. Im Detail ist ein erster Mischer 5 vorhanden, in dem das von dem Signalgenerator 2 ausgesendete Messsignal Tx mit dem reflektierten Empfangssignal Rx gemischt wird. Das Mischsignal aus dem ersten Mischer 5 wird einer ersten Signalempfangseinheit 10 zugeführt und in einer ersten Recheneinheit 11 mittels des üblichen Messalgorithmus ausgewertet.

Zudem ist ein zweiter Mischer 8 vorhanden, in dem das von dem Signalgenerator 2 ausgesendete Messsignal Tx mit dem Diagnosesignal, also dem verzögerten Messsignal Txd zu einem Diagnose-Mischsignal gemischt wird. Das Diagnose-Mischsignal wird einer zweiten Signalempfangseinheit 12 zugeführt und in einer zweiten Recheneinheit 13 mit einem Diagnosealgorithmus ausgewertet. Der Diagnosealgorithmus bestimmt die Frequenz des Diagnose-Mischsignals und/oder die dem Verzögerungselement 7 entsprechende Entfernung und vergleicht die bestimmte Frequenz und/oder die bestimmte Entfernung mit einem in einem Speicher 14 hinterlegten Referenzwert.

Die dargestellte Vorrichtung 1 zeigt insofern zumindest einen Teil einer in die Messanordnung integrierten Diagnoseeinheit, mittels der die Funktionsfähigkeit zumindest des Signalgenerators 2 überprüft werden kann.

Fig. 2 zeigt ein nächstes Ausführungsbeispiel einer Vorrichtung 1 zur Abstandsmessung mit einem Signalgenerator 2 zur Erzeugung eines Messsignals Tx. Der Signalgenerator 2 ist mit einer Sendeantenne 3, die das Messsignal Tx aussendet, verbunden. Weiterhin wird das Messsignal Tx einem ersten Mischer 5 und einem zweiten Mischer 8 zugeleitet.

Für den Empfang eines an einem Objekt reflektierten Empfangssignals Rx ist eine Empfangsantenne 4 vorhanden. Die Empfangsantenne 4 ist mit dem zweiten Eingang des ersten Mischers 5 verbunden, sodass durch den ersten Mischer 5 das Messsignal Tx und das Empfangssignal Rx gemischt werden. Die Mischung dieser beiden Signale wird in eine erste Signalempfangseinheit 10 geleitet und in einer ersten Recheneinheit 11 mittels des üblichen Messalgorithmus ausgewertet.

Das Messsignal Tx wird auch in eine Diagnoseleitung 6 geleitet. Die Diagnoseleitung 6 weist ein Verzögerungselement 7 auf, wobei das Diagnosesignal Txd dadurch entsteht, dass das Messsignal Tx das Verzögerungselement 7 durchläuft. Damit entspricht das Diagnosesignal Txd einem verzögerten Messsignal. Das Diagnosesignal wird in einem zweiten Mischer 8 mit dem Messsignal Tx zu einem Diagnose-Mischsignal gemischt. Das Diagnose-Mischsignal wird einer weiteren Signalempfangseinheit 12 zugeführt und in einer zweiten Recheneinheit 13 ausgewertet. Zur Überprüfung einer korrekten Funktionsfähigkeit der Vorrichtung wird die durch die Recheneinheit 13 bestimmte Frequenz und/oder die dem Verzögerungselement entsprechende Entfernung mit einem in einem Speicher 14 hinterlegten Referenzwert verglichen. Sofern die durch die Recheneinheit bestimmten Werte unter Berücksichtigung eines Toleranzbereiches mit dem hinterlegten Referenzwert oder den hinterlegten Referenzwerten übereinstimmen, kann von einer korrekten Funktionsfähigkeit zumindest des Signalgenerators ausgegangen werden.

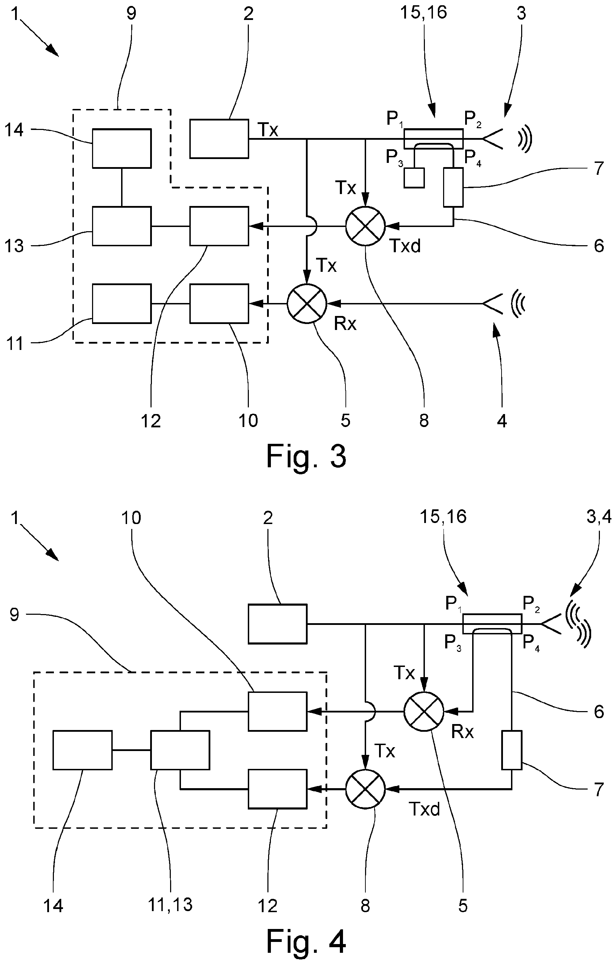

Fig. 3 zeigt ein weiteres Ausführungsbeispiel einer Vorrichtung 1 zur Abstandsmessung mit einer integrierten Diagnoseeinheit. Die Vorrichtung 1 weist einen Signalgenerator 2 zur Erzeugung des Messsignals auf. Der Signalgenerator 2 ist über ein Kopplungselement 15 in Form eines Richtkopplers 16 mit der Sendeantenne 3 verbunden. Wie in den zuvor gezeigten Ausführungsbeispielen wird das Messsignal dem ersten Mischer 5 und dem zweiten Mischer 8 zugeleitet. Zudem wird das Messsignal Tx in Tor P₁ des Richtkopplers 16 eingekoppelt. Über Tor P₂ koppelt das Messsignal Tx in Richtung der Sendeantenne 3 aus. Zudem koppelt das Messsignal Tx über Tor P₄ in die Diagnoseleitung 6 ein. Nach dem Durchgang durch das Verzögerungselement 7 ist das verzögerte Messsignal als Diagnosesignal Txd ausgebildet. Das Diagnosesignal wird in dem zweiten Mischer 8 mit dem Messsignal Tx gemischt. Die Mischung dieser Signale wird einer zweiten Signalempfangseinheit 12 zugeführt. Wie zuvor beschrieben wird aus der Auswertung dieses Diagnose-Mischsignals die Funktionsfähigkeit der Vorrichtung 1 bestimmt.

Weiterhin ist eine separat ausgebildete Empfangsantenne 4 vorhanden, die das reflektierte Empfangssignal Rx empfängt und an den ersten Mischer 5 weiterleitet. In üblicher Weise wird das aus im ersten Mischer 5 erzeugte Mischsignal einer ersten Signalempfangseinheit 10 zugeleitet und ausgewertet.

Im Unterschied zu den zuvor beschriebenen Ausführungsbeispielen weist die in Fig. 4 dargestellte Vorrichtung eine Sende- und Empfangsantenne 3, 4 auf, also eine einzige Antenne, die beide Funktionen erfüllt. Über den Richtkoppler 16 wird das Messsignal von Tor P₁ über Tor P₂ in die Sende- und Empfangsantenne 3, 4 und darüber hinaus über Tor P₄ in die Diagnoseleitung 6 eingekoppelt. Im Weiteren wird das Diagnosesignal wie bereits beschrieben in dem zweiten Mischer 8 mit dem Messsignal Tx gemischt und das Diagnose-Mischsignal einer zweiten Signalempfangseinheit zugeleitet.

Das Empfangssignal Rx koppelt über Tor P₂ in den Richtkoppler 16 ein und über Tor P₃ in Richtung des ersten Mischers 5 aus. Anschließend wird das Mischsignal in die Signalempfangseinheit 10 weitergeleitet und ausgewertet. Im Unterschied zu den zuvor beschriebenen Ausführungsbeispielen werden die Mischsignale aus den Mischern 5 und 8 in derselben Recheneinheit, d.h. durch denselben Algorithmus ausgewertet. Insofern kann durch die dargestellte Diagnoseeinheit sowohl die Funktionsfähigkeit des Signalgenerators als auch das korrekte Arbeiten des Auswertealgorithmus überprüft werden.

Hierzu ist das Verzögerungselement 7 derart ausgebildet, dass sich der Frequenzhub des Diagnosesignals von dem Frequenzhub des Empfangssignals unterscheidet, sodass sich dadurch gleichfalls die Laufzeiten des Diagnosesignals und des Empfangssignals unterscheiden.

Alternativ sind die Mischer 5, 8 und/oder die Signalempfangseinheiten 10, 12 derart ausgebildet, dass sie das jeweilige Mischsignal nur zeitweise weiterleiten, sodass die einzelnen Mischsignale in unterschiedlichen Zeitfenstern ausgewertet werden.

Alternativ ist die Recheneinheit bzw. der Algorithmus derart ausgebildet, dass die Recheneinheit bzw. der Algorithmus die Signale aus den Signalempfangseinheiten 10, 12 getrennt, beispielsweise nacheinander, auswertet.

Hierdurch kann sichergestellt werden, dass sich die Mischsignale aus den einzelnen Mischern 5, 8 getrennt auswerten lassen.

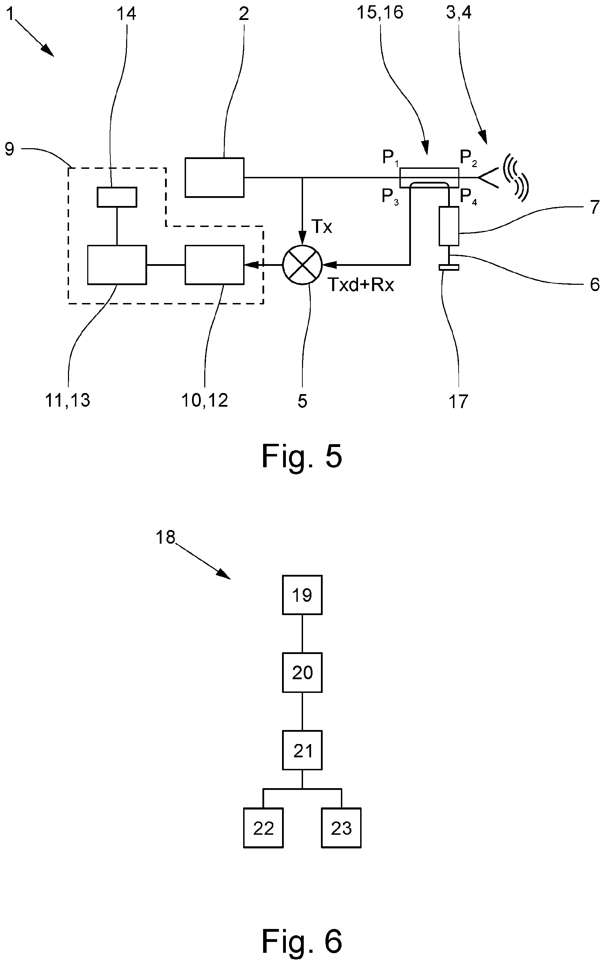

Gemäß dem in Fig. 5 dargestellten Ausführungsbeispiel ist ebenfalls eine Sende- und Empfangsantenne 3, 4 sowie ein Richtkoppler 16 vorhanden, sodass im Betrieb das von dem Signalgenerator 2 ausgesendete Messsignal sowohl in Richtung der Sende- und Empfangsantenne 3, 4 als auch in die Diagnoseleitung 6 ausgekoppelt wird. Hinter dem Verzögerungselement 7 wird das Diagnosesignal an einem Reflexionselement 17 reflektiert und erneut durch das Verzögerungselement 7 geleitet. Anschließend wird das Diagnosesignal über dieselbe Leitung wie das Empfangssignal dem ersten Mischer 5 zugeleitet, sodass insgesamt an dem zweiten Eingang des ersten Mischers 5 eine Linearkombination aus dem Empfangssignal und dem Diagnosesignal anliegt.

Das Mischsignal des ersten Mischers 5 wird der Signalempfangseinheit 10, 12 zugeleitet und durch die Recheneinheit 11, 13 ausgewertet. Wie bereits zu dem in Fig. 4 dargestellten Ausführungsbeispiel beschrieben, ist das Verzögerungselement 7 derart ausgebildet, dass sich der Frequenzhub des Diagnosesignals von dem Frequenzhub des Empfangssignals unterscheidet, sodass die durch das Verzögerungselement simulierte Entfernung einer Entfernung entspricht, die nicht im üblichen Messbereich liegt und sodass eine getrennte Auswertung des Empfangssignals und des Diagnosesignals gewährleistet werden kann.

Fig. 6 zeigt ein erstes Ausführungsbeispiel eines erfindungsgemäßen Verfahrens 18 Funktionsüberprüfung einer Vorrichtung 1 zur Abstandsmessung, wobei die Vorrichtung 1 gemäß einem der in den Fig. 1 bis 4 dargestellten Ausführungsbeispielen ausgebildet ist.

Das Verfahren 18 weist die folgenden Schritte auf:
- Aussenden 19 eines elektromagnetischen Messsignals durch den Signalgenerator 2, wobei ein Teil des Messsignals in den ersten Mischer 5 eingespeist wird und wobei ein Teil des Messsignals in die Diagnoseleitung 6 einkoppelt, sodass das Messsignal das Verzögerungselement 7 wenigstens einmal durchläuft und so zum Diagnosesignal wird und optional Einspeisen des Messsignals in einen zweiten Mischer 8,
- Mischen 20 des Diagnosesignals mit dem Messsignal in dem ersten Mischer 5 oder in dem zweiten Mischer 8 und erzeugen eines Diagnose-Mischsignals,
- Erfassen und Auswerten 21 des Diagnose-Mischsignals durch die Auswerteeinheit 9,
- wobei die Auswerteeinheit 9 zur Auswertung die Frequenz des Diagnose-Mischsignals bestimmt und mit einem Referenzwert vergleicht und/oder wobei aus dem Diagnose-Mischsignal die dem Verzögerungselement 7 entsprechende Entfernung bestimmt wird und mit einem Referenzwert verglichen wird.

Weicht das gemessene Spektrum und/oder die gemessene Entfernung von einem hinterlegten Referenzwert ab, so wird eine Meldung ausgegeben 22 und/oder der gemessene Abstandswert des Empfangssignals wird mit Hilfe der Abweichung korrigiert 23.

Im Ergebnis kann durch das beschriebene Verfahren zur Funktionsüberprüfung die Messgenauigkeit der Vorrichtung zur Abstandsmessung erhöht werden, da auch interne Fehler, die nicht unbedingt im angezeigten Messwert der Entfernung erkennbar sind, erkannt und berücksichtigt werden können.

### Bezugszeichen

- 1: Vorrichtung zur Abstandsmessung
- 2: Signalgenerator
- 3: Sendeantenne
- 4: Empfangsantenne
- 5: erster Mischer
- 6: Diagnoseleitung
- 7: Verzögerungselement
- 8: zweiter Mischer
- 9: Auswerteeinheit
- 10: erste Signalempfangseinheit
- 11: erste Recheneinheit
- 12: zweite Signalempfangseinheit
- 13: zweite Recheneinheit
- 14: Speicher
- 15: Kopplungselement
- 16: Richtkoppler
- 17: Reflexionselement
- 18: Verfahren zur Funktionsüberprüfung einer Vorrichtung zur Abstandsmessung
- 19: Aussenden eines Messsignals
- 20: Mischen des Diagnosesignals mit dem Messsignal
- 21: Erfassen und Auswerten des Diagnose-Mischsignals
- 22: Ausgabe einer Meldung
- 23: Korrektur des Messwerts

## Patentansprüche

1. Vorrichtung (1) zur Abstandsmessung umfassend
wenigstens einen Signalgenerator (2) zur Erzeugung eines elektromagnetischen Messsignals,
wenigstens eine Sendeantenne (3) zur Aussendung des Messsignals und wenigstens eine Empfangsantenne (4) für den Empfang eines Empfangssignals, wobei der Signalgenerator (2) zumindest mit der Sendeantenne (3) verbunden ist,
wenigstens einen ersten Mischer (5), wobei ein erster Eingang des ersten Mischers (5) mit dem Signalgenerator verbunden ist und wobei ein zweiter Eingang des ersten Mischers (5) zumindest mit der Empfangsantenne (4) verbunden ist, sodass der erste Mischer (5) im Betrieb zumindest das von dem Signalgenerator (2) erzeugte Messsignal und das von der Empfangsantenne (4) empfangene Empfangssignal mischt, und weiterhin umfassend eine Auswerteeinheit (9),
wobei eine integrierte Diagnoseeinheit vorhanden ist, wobei die Diagnoseeinheit zumindest eine Diagnoseleitung (6) aufweist, wobei der Signalgenerator (2) mit der Diagnoseleitung (6) derart verbunden ist, dass im Betrieb das von dem Signalgenerator (2) erzeugte Messsignal zumindest teilweise in die Diagnoseleitung (6) eingekoppelt wird,
wobei die Diagnoseleitung (6) wenigstens ein Verzögerungselement (7) aufweist, wobei im Betrieb das Messsignal nach zumindest einem Durchlauf durch das Verzögerungselement (7) als Diagnosesignal ausgebildet ist, und
wobei die Diagnoseleitung (6) mit dem ersten Mischer (5) oder mit einem zweiten Mischer (8) verbunden ist, sodass im Betrieb das Diagnosesignal in dem ersten Mischer (5) oder in dem zweiten Mischer (8) mit dem Messsignal zu einem Diagnose-Mischsignal gemischt wird,
wobei der Ausgang des ersten Mischers (5), und sofern vorhanden der Ausgang des zweiten Mischers (8), mit der Auswerteeinheit (9) verbunden ist bzw. sind und die Auswerteeinheit (9) derart ausgebildet ist, dass sie anhand des Diagnose-Mischsignals die Funktionsfähigkeit des Signalgenerators (2) und/oder eines Auswertealgorithmus überprüft.

2. Vorrichtung (1) nach Anspruch 1, **dadurch gekennzeichnet, dass** die Sendeantenne (3) und die Empfangsantenne (4) als eine gemeinsame Sende- und Empfangsantenne (3, 4) ausgebildet ist.

3. Vorrichtung (1) nach Anspruch 1 oder 2, **dadurch gekennzeichnet, dass** wenigstens ein Kopplungselement (15) vorhanden ist, wobei der Signalgenerator (2) über das Kopplungselement (15) zumindest mit der Sendeantenne (3) verbunden ist, sodass im Betrieb das Messsignal über das Kopplungselement (15) zumindest teilweise an die Sendeantenne (3) übertragen wird, und wobei der Signalgenerator (2) über das Kopplungselement (15) mit der Diagnoseleitung (6) verbunden ist, sodass im Betrieb das Messsignal über das Kopplungselement (15) zumindest teilweise an die Diagnoseleitung (6) übertragen wird.

4. Vorrichtung (1) nach Anspruch 3, **dadurch gekennzeichnet, dass** die Sendeantenne (3) und die Empfangsantenne (4) als eine gemeinsame Sende- und Empfangsantenne (3, 4) ausgebildet ist und dass im Betrieb das Empfangssignal über das Kopplungselement (15) zu dem ersten Mischer (5) übertragen wird.

5. Vorrichtung (1) nach Anspruch 3 oder 4, **dadurch gekennzeichnet, dass** das Kopplungselement (15) als Richtkoppler (16), vorzugsweise mit vier Toren (P₁, P₂, P₃, P₄), ausgebildet ist.

6. Vorrichtung (1) nach einem der Ansprüche 3 bis 5, **dadurch gekennzeichnet, dass** das Kopplungselement (15) derart unsymmetrisch ausgebildet ist, dass die Signalübertragung in die einzelnen Tore (P₁, P₂, P₃, P₄) unterschiedlich gewichtet ist, wobei vorzugsweise im Betrieb in das Tor (P₂) Richtung Sende- und Empfangsantenne zwischen 60 % und 80 % der eingehenden Leistung des Messsignals übertragen werden.

7. Vorrichtung (1) nach Anspruch 1 bis 6, **dadurch gekennzeichnet, dass** die Diagnoseleitung (6) durch ein Reflexionselement (17) begrenzt ist.

8. Vorrichtung (1) nach einem der Ansprüche 1 bis 7, **dadurch gekennzeichnet, dass** das Verzögerungselement (7) derart ausgebildet ist, dass das Diagnosesignal einen Frequenzunterschied zu dem Empfangssignal aufweist, sodass die durch das Verzögerungselement simulierte Entfernung einer Entfernung entspricht, die nicht im üblichen Messbereich liegt.

9. Vorrichtung (1) nach einem der Ansprüche 1 bis 8, **dadurch gekennzeichnet, dass** das Verzögerungselement (7) als Wellenleiter oder als Slow Wave Wellenleiter oder als Mikrostreifenleitung oder als Koaxialleitung ausgebildet ist.

10. Vorrichtung (1) nach einem der Ansprüche 1 bis 9, **dadurch gekennzeichnet, dass** die Auswerteeinheit (9) zur Durchführung eines Verfahrens (18) nach einem der Ansprüche 11 bis 14 ausgebildet ist.

11. Verfahren (18) zur Funktionsüberprüfung einer Vorrichtung (1) zur Abstandsmessung nach einem der Ansprüche 1 bis 9 und das Verfahren (18) die folgenden Schritte aufweist:
- Aussenden (19) eines elektromagnetischen Messsignals durch den Signalgenerator (2), wobei ein Teil des Messsignals in den ersten Mischer (5) eingespeist wird und wobei ein Teil des Messsignals in die Diagnoseleitung (6) einkoppelt, sodass das Messsignal das Verzögerungselement (7) wenigstens einmal durchläuft und so zum Diagnosesignal wird und optional Einspeisen des Messsignals in einen zweiten Mischer (8),
- Mischen (20) des Diagnosesignals mit dem Messsignal in dem ersten Mischer (5) oder in dem zweiten Mischer (8) und erzeugen eines Diagnose-Mischsignals,
- Erfassen und Auswerten (21) des Diagnose-Mischsignals durch die Auswerteeinheit (9),
- wobei die Auswerteeinheit (9) zur Auswertung die Frequenz des Diagnose-Mischsignals bestimmt und mit einem Referenzwert vergleicht und/oder wobei aus dem Diagnose-Mischsignal die dem Verzögerungseelement (7) entsprechende Entfernung bestimmt wird und mit einem Referenzwert verglichen wird.

12. Verfahren (18) nach Anspruch 11, **dadurch gekennzeichnet, dass** das Verfahren (18) für jeden Messvorgang oder regelmäßig oder auf Nachfrage des Benutzers durchgeführt wird.

13. Verfahren (18) nach Anspruch 11 oder 12, **dadurch gekennzeichnet, dass** das Signal am zweiten Eingang des ersten Mischers (5) einer Linearkombination aus dem Empfangssignal und dem Diagnosesignal entspricht, sodass am ersten Mischer (5) die Linearkombination mit dem Messsignal zu einem kombinierten Mischsignal gemischt wird.

14. Verfahren (18) nach Anspruch 13, **dadurch gekennzeichnet, dass** das Verzögerungselement (7) derart ausgebildet ist, dass sich die Frequenz des Diagnosesignals und des Empfangssignals unterscheiden, sodass die Auswerteeinheit das Diagnose-Mischsignal basierend auf dem Frequenzunterschied aus dem kombinierten Mischsignal extrahiert.

## Claims

1. Device (1) for distance measurement comprising
at least one signal generator (2) for generating an electromagnetic measurement signal,
at least one transmitting antenna (3) for transmitting the measurement signal and at least one receiving antenna (4) for receiving a received signal, wherein the signal generator (2) is connected at least to the transmitting antenna (3)
at least a first mixer (5), wherein a first input of the first mixer (5) is connected to the signal generator and wherein a second input of the first mixer (5) is connected at least to the receiving antenna (4), so that, during operation, the first mixer (5) mixes at least the measurement signal generated by the signal generator (2) and the received signal received by the receiving antenna (4)
and further comprising an evaluation unit (9),
wherein an integrated diagnostic unit is provided, wherein the diagnostic unit has at least one diagnostic line (6), wherein the signal generator (2) is connected to the diagnostic line (6) in such a way that, during operation, the measurement signal generated by the signal generator (2) is at least partially coupled into the diagnostic line (6),
wherein the diagnostic line (6) has at least one delay element (7), wherein the measurement signal is formed as a diagnostic signal after at least one pass through the delay element (7) during operation, and
wherein the diagnostic line (6) is connected to the first mixer (5) or to a second mixer (8), so that, during operation, the diagnostic signal is mixed with the measurement signal in the first mixer (5) or in the second mixer (8) to form a diagnostic mixed signal,
wherein the output of the first mixer (5), and if present the output of the second mixer (8), is or are connected to the evaluation unit (9), and wherein the evaluation unit (9) is designed in such a way that it uses the diagnostic mixed signal to check the functionality of the signal generator (2) and/or of an evaluation algorithm.

2. Device (1) according to claim 1, **characterized in that** the transmitting antenna (3) and the receiving antenna (4) are designed as a common transmitting and receiving antenna (3, 4).

3. Device (1) according to claim 1 or 2, **characterized in that** at least one coupling element (15) is present, wherein the signal generator (2) is connected at least to the transmitting antenna (3) via the coupling element (15), so that during operation the measurement signal is transmitted at least partially to the transmitting antenna (3) via the coupling element (15), and wherein the signal generator (2) is connected to the diagnostic line (6) via the coupling element (15) so that, during operation, the measurement signal is at least partially transmitted to the diagnostic line (6) via the coupling element (15).

4. Device (1) according to claim 3, **characterized in that** the transmitting antenna (3) and the receiving antenna (4) are designed as a common transmitting and receiving antenna (3, 4) and that, during operation, the received signal is transmitted to the first mixer (5) via the coupling element (15).

5. Device (1) according to claim 3 or 4, **characterized in that** the coupling element (15) is designed as a directional coupler (16), preferably with four ports (P₁, P₂, P₃, P₄).

6. Device (1) according to any one of claims 3 to 5, **characterized in that** the coupling element (15) is designed asymmetrically in such a way that the signal transmission into the individual ports (P₁, P₂, P₃, P₄) is weighted differently, wherein preferably between 60% and 80% of the incoming power of the measurement signal is transmitted into the port (P2) in the direction of the transmitting and receiving antenna during operation.

7. Device (1) according to any one of claims 1 to 6, **characterized in that** the diagnostic line (6) is limited by a reflection element (17).

8. Device (1) according to any one of claims 1 to 7, **characterized in that** the delay element (7) is designed in such a way that the diagnostic signal has a frequency difference to the received signal, so that the distance simulated by the delay element corresponds to a distance which is not in the usual measurement range.

9. Device (1) according to any one of claims 1 to 8, **characterized in that** the delay element (7) is designed as a waveguide or as a slow wave waveguide or as a microstrip line or as a coaxial line.

10. Device (1) according to any one of claims 1 to 9, **characterized in that** the evaluation unit (9) is designed to carry out a method (18) according to any one of claims 11 to 14.

11. Method (18) for functionally checking a device (1) for distance measurement according to any one of claims 1 to 9 and
the method (18) has the following steps:
- emitting (19) an electromagnetic measurement signal by the signal generator (2), wherein a part of the measurement signal is fed into the first mixer (5) and wherein a part of the measurement signal couples into the diagnostic line (6) so that the measurement signal passes through the delay element (7) at least once and thus becomes the diagnostic signal, and optionally feeding the measurement signal into a second mixer (8),
- mixing (20) the diagnostic signal with the measurement signal in the first mixer (5) or in the second mixer (8) and generating a diagnostic mixed signal,
- detecting and evaluating (21) the diagnostic mixed signal by the evaluation unit (9),
- wherein the evaluation unit (9) determines the frequency of the diagnostic mixed signal for evaluation and compares it with a reference value and/or wherein the distance corresponding to the delay element (7) is determined from the diagnostic mixed signal and compared with a reference value.

12. Method (18) according to claim 11, **characterized in that** the method (18) is carried out for each measurement operation or periodically or on demand of the user.

13. Method (18) according to claim 11 or 12, **characterized in that** the signal at the second input of the first mixer (5) corresponds to a linear combination of the received signal and the diagnostic signal, so that, at the first mixer (5), the linear combination is mixed with the measurement signal to form a combined mixed signal.

14. Method (18) according to claim 13, **characterized in that** the delay element (7) is designed in such a way that the frequency of the diagnostic signal and the received signal differ, so that the evaluation unit extracts the diagnostic mixed signal based on the frequency difference from the combined mixed signal.

## Revendications

1. Dispositif (1) de mesure de distance comprenant au moins un générateur de signal (2) destiné à générer un signal de mesure électromagnétique,
au moins une antenne d'émission (3)destinée à émettre le signal de mesure et au moins une antenne de réception (4) destinée à recevoir un signal de réception, le générateur de signal (2) étant relié au moins à l'antenne d'émission (3),
au moins un premier mélangeur (5), une première entrée du premier mélangeur (5) étant reliée au générateur de signal et une deuxième entrée du premier mélangeur (5) étant reliée au moins à l'antenne de réception (4), de sorte que, pendant le fonctionnement, le premier mélangeur (5) mélange au moins le signal de mesure, généré par le générateur de signal (2), et le signal de réception reçu par l'antenne de réception (4),
et comprenant en outre une unité d'évaluation (9),
une unité de diagnostic intégrée étant prévue, l'unité de diagnostic comportant au moins une ligne de diagnostic (6), le générateur de signal (2) étant relié à la ligne de diagnostic (6) de telle sorte que, pendant le fonctionnement, le signal de mesure généré par le générateur de signal (2) soit au moins partiellement injecté par couplage dans la ligne de diagnostic (6),
la ligne de diagnostic (6) comportant au moins un élément à retard (7), le signal de mesure étant formé, pendant le fonctionnement, comme un signal de diagnostic après au moins un passage par l'élément à retard (7), et
la ligne de diagnostic (6) étant reliée au premier mélangeur (5) ou à un deuxième mélangeur (8) de sorte que, pendant le fonctionnement, le signal de diagnostic soit mélangé au signal de mesure, afin de former un signal de mélange de diagnostic, dans le premier mélangeur (5) ou dans le deuxième mélangeur (8),
la sortie du premier mélangeur (5) et, le cas échéant, la sortie du deuxième mélangeur (8), étant reliées à l'unité d'évaluation (9) et l'unité d'évaluation (9) étant conçue de façon à vérifier, sur la base du signal de mélange de diagnostic, la fonctionnalité du générateur de signal (2) et/ou d'un algorithme d'évaluation.

2. Dispositif (1) selon la revendication 1, **caractérisé en ce que** l'antenne d'émission (3) et l'antenne de réception (4) sont conçues comme une antenne d'émission et de réception commune (3, 4).

3. Dispositif (1) selon la revendication 1 ou 2, caractérisé en qu'au moins un élément de couplage (15) est prévu, le générateur de signal (2) étant relié au moins à l'antenne d'émission (3) par le biais de l'élément de couplage (15) de sorte que, pendant le fonctionnement, le signal de mesure est transmis au moins partiellement à l'antenne d'émission (3) par 1 biais d l'élément de couplage (15), et le générateur de signal (2) étant relié à la ligne de diagnostic (6) par le biais de l'élément de couplage (15) de sorte que, pendant le fonctionnement, le signal de mesure soit transmis au moins partiellement à la ligne de diagnostic (6) par le biais de l'élément de couplage (15) .

4. Dispositif (1) selon la revendication 3, **caractérisé en ce que** l'antenne d'émission (3) et l' antenne de réception (4) sont conçues comme une antenne d'émission et de réception commune (3, 4) et **en ce que**, pendant le fonctionnement, le signal de réception est transmis au premier mélangeur (5) par le biais de l'élément de couplage (15).

5. Dispositif (1) selon la revendication 3 ou 4, **caractérisé en ce que** l'élément de couplage (15) est conçu comme un coupleur directionnel (16), de préférence à quatre ports (P₁, P₂, P₃, P₄).

6. Dispositif (1) selon l'une des revendications 3 à 5, **caractérisé en ce que** l'élément de couplage (15) est conçu de manière asymétrique de telle sorte que la transmission de signal dans les ports individuelles (P₁, P₂, P₃, P₄) est pondéré de manière différente, entre 60 % et 80 % de la puissance entrante du signal de mesure étant de préférence transmise en fonctionnement dans le port (P₂) en direction de l'antenne d'émission et de réception.

7. Dispositif (1) selon les revendications 1 à 6, **caractérisé en ce que** la ligne de diagnostic (6) est limitée par un élément de réflexion (17).

8. Dispositif (1) selon l'une des revendications 1 à 7, **caractérisé en ce que** l'élément à retard (7) est conçu de telle sorte que le signal de diagnostic présente une différence de fréquence par rapport au signal de réception de sorte que la distance simulée par l'élément à retard corresponde à une distance qui n'est pas dans la plage de mesure habituelle.

9. Dispositif (1) selon l'une des revendications 1 à 8, **caractérisé en ce que** l'élément à retard (7) est conçu comme un guide d'onde ou un guide d'onde à ondes lentes ou comme une ligne à micro-ruban ou une ligne coaxiale.

10. Dispositif (1) selon l'une des revendications 1 à 9, **caractérisé en ce que** l'unité d'évaluation (9) est conçue pour mettre en œuvre un procédé (18) selon l'une des revendications 11 à 14.

11. Procédé (18) de vérification du fonctionnement d'un dispositif (1) de mesure de distance selon l'une des revendications 1 à 9, le procédé (18) comprenant les étapes suivantes :
- émettre (19) un signal de mesure électromagnétique par le biais du générateur de signal (2), une partie du signal de mesure étant introduite dans le premier mélangeur (5) et une partie du signal de mesure étant injectée par couplage dans la ligne de diagnostic (6), de sorte que le signal de mesure passe au moins une fois par l'élément à retard (7) et devienne ainsi un signal de diagnostic, et éventuellement injecter le signal de mesure dans un deuxième mélangeur (8),
- mélanger (20) le signal de diagnostic au signal de mesure dans le premier mélangeur (5) ou dans le deuxième mélangeur (8) et générer un signal de mélange de diagnostic,
- détecter et évaluer (21) le signal de mélange et de diagnostic par le biais de l'unité d'évaluation (9),
- pour effectuer l'évaluation l'unité d'évaluation (9) déterminant la fréquence du signal de mélange de diagnostic et la comparant à une valeur de référence et/ou la distance qui correspond à l'élément à retard (7) étant déterminée à partir du signal de mélange de diagnostic et comparée à une valeur de référence.

12. Procédé (18) selon la revendication 11, **caractérisé en ce que** le procédé (18) est mis en œuvre à chaque processus de mesure ou de manière régulière ou à la demande de l'utilisateur.

13. Procédé (18) selon la revendication 11 ou 12, **caractérisé en ce que** le signal à la deuxième entrée du premier mélangeur (5) correspond à une combinaison linéaire du signal de réception et du signal de diagnostic, de sorte que la combinaison linéaire est mélangée au signal de mesure au niveau du premier mélangeur (5) afin d'obtenir un signal de mélange combiné.

14. Procédé (18) selon la revendication 13, **caractérisé en ce que** l'élément à retard (7) est conçu de telle sorte que la fréquence du signal de diagnostic et celle du signal de réception diffèrent de sorte que l'unité d'évaluation extraie le signal de mélange de diagnostic sur la base de la différence de fréquence par rapport au signal de mélange combiné.
